# EUROPÄISCHE PATENTSCHRIFT

(11) **EP 1 066 430 B1**
(45) Veröffentlichungstag und Bekanntmachung des Hinweises auf die Patenterteilung: **17.09.2003**
(21) Anmeldenummer: 99916842.0
(22) Anmeldetag: 22.03.1999
(51) Int. Cl.: E03F 5/14, B01D 33/04

(54) **UMLAUF-SIEBRECHEN**
REVOLVING SCREENING RACK
GRILLE DE CRIBLAGE ROTATIVE

(30) Priorität: 30.03.1998 DE 19814140
(43) Veröffentlichungstag der Anmeldung: 10.01.2001
(73) Patentinhaber: Noggerath Holding GmbH & Co. KG, D-31708 Ahnsen (DE)
(72) Erfinder: KROOS, Hein, D-31737 Rinteln (DE)
(74) Vertreter: Gleiss & Grosse
(86) Internationale Anmeldenummer: EP9901871
(87) Internationale Veröffentlichungsnummer: WO99050510

(56) Entgegenhaltungen:
- EP-A- 0 542 191
- WO-A-91/13671
- WO-A-93/22513

## Beschreibung

Die Erfindung betrifft einen Umlauf-Siebrechen mit einem antreibbaren, endlosen Siebband gemäß Oberbegriff des Anspruchs 1.

Ein Umlauf-Siebrechen der hier angesprochenen Art ist aus dem deutschen Gebrauchsmuster 89 01 245 U1 bekannt. Dieser Umlauf-Siebrechen ist nach Art einer geschlossenen Gliederkette realisiert, wobei die einzelnen Glieder als Siebelemente eines Siebbands dienen und durch mehrere Rechenhakenelemente ergänzt werden. Diese Rechenhakenelemente sind so bewegbar, daß jeweils ein Rechenhakenelement zwischen zwei Platten eines Siebelements hindurch verlagert werden kann, also durch das Siebelement hindurchgreift. Das heißt, das Rechenhakenelement ist ein- und ausfahrbar ausgebildet. Das Rechenhakenelement wird dabei über einen Lenkhebel angesteuert, der mit seinem einen Ende am Rechenhakenelement schwenkbar angelenkt ist. Das andere Ende dieses Lenkhebels ist in einer Führungsbahn geführt, die innerhalb des von dem Umlauf-Siebrechen umschlossenen Raums liegt. Die Führungsbahn ist dabei so gewählt, daß die Rechenhakenelemente an einer Stelle des umlaufenden Siebrechens eingezogen werden, an der eine Reinigungsbürste am Siebrechen angreift.

Nachteilig bei diesem bekannten Siebrechen ist, daß die Führungsbahn an unterschiedliche Förderhöhen des Umlauf-Siebrechens angepaßt werden muß. Darüber hinaus treten beim Spannen des Umlauf-Siebrechens zwischen zwei Umlenkeinrichtungen Probleme auf, da auch hier die Führungsbahn angepaßt werden muß, wenn die Umlenkeinrichtungen voneinander wegbewegt werden.

Aus der WO 91/13671 ist ein Umlauf-Siebrechen bekannt, bei dem die Rechenhakenelemente- ein- und ausfahrbar an dem Siebrechen angeordnet sind. Die Rechenelemente werden jeweils über einen Lenkhebel angesteuert, der mit seinem einen Ende in einer Führungsbahn geführt ist. Der Umlauf-Siebrechen weist einen teleskopartig ausziehbaren Tragrahmen auf, an dem Umlenkeinrichtungen für das Siebband befestigt sind. Der teleskopartig ausziehbare Tragrahmen ist in seiner jeweiligen Ausziehstellung festlegbar.

Es ist daher Aufgabe der Erfindung, einen Umlauf-Siebrechen anzugeben, der diese Nachteile nicht aufweist.

Die Aufgabe wird mit einem Umlauf-Siebrechen gelöst, der die Merkmale des Anspruchs 1 zeigt. Es ist ein Umlauf-Siebrechen mit einem antreibbaren, endlosen Siebband vorgesehen, wobei das Siebband durch mehrere Siebelemente gebildet ist. Diese Siebelemente weisen jeweils mehrere längliche Platten auf, die parallel und in einem Abstand zueinander angeordnet sind. Um die Platten auf einem gewünschten Abstand zueinander zu halten, können Distanzmittel eingesetzt werden. Die Platten eines Siebelements werden jeweils von einem stabförmigen Verbindungselement durchgriffen, so daß die Platten zweier Siebelemente gegeneinander schwenkbar nach Art einer Gliederkette miteinander verbunden sind. Der Umlauf-Siebrechen weist weiterhin ein schwenkbar gelagertes Rechenhakenelement auf, das zwischen zwei nebeneinanderliegenden Platten schwenkbar zumindest teilweise hindurchverlagerbar ist. Das Rechenhakenelement ist also relativ zum Siebelement aus- und einfahrbar. Für diese Bewegung des Rechenhakenelements ist ein Lenkhebel vorgesehen, der mit seinem einen Ende schwenkbar am Rechenhakenelement angelenkt ist. Erfindungsgemäß ist das andere Ende des Lenkhebels schwenkbar am Siebband gelagert. Damit ist es vorteilhaft möglich, das Rechenhakenelement im Bereich einer Umlenkeinrichtung des Umlauf-Siebrechens -nur durch die gewählte Kinematik ohne eine Führungsbahn zu verwenden- bezüglich des Siebelement ein- und auszufahren. Damit kann im Umlenkbereich eine Reinigung des Siebbands durchgeführt werden. Weiterhin ist vorteilhaft, daß der sogenannte Sohlsprung -wenn der Umlauf-Siebrechen in einem Gerinne angeordnet ist- niedrig gewählt werden kann, so daß hier eine Materialersparnis vorliegt und ein einfacher Einbau in das Gerinne beziehungsweise den Kanal möglich ist. Dadurch, daß keine Führungsbahn notwendig ist, ist es auf einfache Art und Weise möglich, den Umlauf-Siebrechen zwischen zwei Umlenkeinrichtungen zu spannen, da die Verlagerbarkeit des Rechenhakenelements im Umlenkbereich durch das Siebband selbst erreicht wird. Der erfindungsgemäße Umlauf-Siebrechen zeichnet sich auch dadurch aus, daß das Siebband direkt angetrieben ist, das heißt, das Siebband bildet auch die Antriebskette. Dadurch wird die Anzahl der Verschleißelemente verringert und es kann eine größere Siebfläche bereitgestellt werden, die die Effektivität des erfindungsgemäßen Umlauf-Siebrechens erhöht.

Ein Ausführungsbeispiel des erfindungsgemäßen Umlauf-Siebrechens zeichnet sich dadurch aus, daß der Lenkhebel mit seinem anderen Ende an einem Siebelement des Siebbands schwenkbar gelagert befestigt ist, das -in Förderrichtung des Siebbands gesehendem Siebelement nachgeordnet ist, das ein Rechenhakenelement aufweist. Damit ist der Lenkhebel- und somit auch das Rechenhakenelement im Umlenkbereich des Siebbands dadurch betätigt, daß sich die Lagerpunkte des Lenkhebels aufeinander zu bewegen, das heißt sich einander annähern.

In bevorzugter Ausführungsform ist vorgesehen, daß das Ende des Lenkhebels, welches am Siebband angelenkt ist, von dem stabförmigen Verbindungselement durchgriffen ist. Somit wird auf einfache Art und Weise der siebbandseitige Lagerpunkt des Lenkhebels gebildet. Dieser Lagerpunkt fällt also mit der Schwenkachse zweier Siebelemente zusammen.

Ein besonders bevorzugtes Ausführungsbeispiel zeichnet sich dadurch aus, daß zumindest eine als Steuerlasche ausgebildete Platte des Siebelements, an dem der Lenkhebel gelagert ist, im wesentlichen dreieckförmig realisiert ist, wobei zwei Eckbereiche von jeweils einem stabförmigen Verbindungselement durchgriffen sind und an dem dritten Eckbereich der Lenkhebel drehbar gelagert angeordnet ist. Der Lagerpunkt des Lenkhebels wird somit aus dem Bereich des Siebbands heraus verlagert. Damit ist eine leichte Zugänglichkeit an den Lenkhebel gewährleistet, so daß dieser beispielsweise bei Beschädigung einfach austauschbar ist. Alternativ kann die Steuerlasche auch T-förmig oder L-förmig realisiert sein. Bei einer T-förmigen Steuerlasche sind die beiden Enden des Querstegs jeweils von einem stabförmigen Verbindungselement durchgriffen, wobei an dem freien Ende des Horizontalstegs des T's der Lenkhebel schwenkgelagert angeordnet ist. Bei der L-förmigen Ausgestaltung der Steuerlasche durchgreift jeweils ein stabförmiges Verbindungselement die Enden des langen Schenkels des L's. Der Lenkhebel ist dann an dem freien Ende des kurzen Schenkels des L's schwenkbar gelagert angeordnet.

Bei einer L- oder T-förmigen Steuerlasche bildet somit der kurze Schenkel des L's beziehungsweise der Horizontalsteg des T's einen Fortsatz. Bei der dreieckförmigen Steuerlasche bildet der dritte Eckbereich diesen Fortsatz. Der Fortsatz weist für die Schwenklagerung des Lenkhebels ein Lagerauge auf, wobei sich der Fortsatz quer zur Längserstreckung der Steuerlasche erstreckt.

In bevorzugter Ausführungsform ist vorgesehen, daß das Rechenhakenelement auf dem stabförmigen Verbindungselement drehbar gelagert ist. Die Schwenkachse des Rechenhakenelements fällt somit mit der Schwenkachse zweier Siebelemente zusammen. Es ist also kein zusätzlicher Aufwand erforderlich, um die Beweglichkeit des Rechenhakenelements zu ermöglichen.

Ein bevorzugtes Ausführungsbeispiel zeichnet sich dadurch aus, daß das Rechenhakenelement im wesentlichen L-förmig realisiert ist. An dem freien Schenkelende des L's ist das Rechenhakenelement schwenkbar zwischen den Platten eines Siebelements gelagert. Mit der Basis des L's ist ein Rechenzinken realisiert, der bei der Schwenkbewegung des Rechenhakenelements aus dem Bereich des Siebbands heraustritt beziehungsweise im Umlenkbereich des Siebbands eingezogen wird, wodurch die leichte Reinigung des Siebbands sichergestellt ist.

In bevorzugter Ausführungsform ist vorgesehen, daß das Rechenhakenelement im Übergangsbereich zwischen dem Schenkel und der Basis mit dem Lenkhebel schwenkbar verbunden ist.

Ein bevorzugtes Ausführungsbeispiel zeichnet sich dadurch aus, daß das Rechenhakenelement ein erstes Lagerauge aufweist, durch das das stabförmige Verbindungselement hindurchtritt. Somit kann auf einfache Art und Weise der Schwenkpunkt des Rechenhakenelements realisiert werden.

In bevorzugter Ausführungsform ist vorgesehen, daß das Rechenhakenelement ein zweites Lagerauge aufweist, so daß das Rechenhakenelement mit einem Verbindungsstück an dem Lenkhebel schwenkbeweglich befestigbar ist. Hierzu kann vorgesehen sein, daß das Verbindungsstück als zylindrischer Bolzen ausgeführt ist.

Ein besonders bevorzugtes Ausführungsbeispiel zeichnet sich dadurch aus, daß beide Lageraugen des Rechenhakenelements je eine Randöffnung aufweisen. Dadurch ist es besonders einfach möglich, ohne das Siebband auch nur teilweise zu zerlegen, ein Rechenhakenelement auszutauschen.

In besonders bevorzugter Ausführungsform ist vorgesehen, daß die Öffnungsweite der Randöffnung des zweiten Lagerauges etwas geringer ist als der Durchmesser beziehungsweise der Querschnitt des Verbindungsstücks des Lenkhebels mit dem Rechenhakenelement. Mithin ist eine Clipsverbindung realisiert, die das Rechenhakenelement mit dem Schwenkhebel verbindet. Diese Clipsverbindung ist einfach koppelbar und lösbar, so daß beim Austausch eines Rechenhakenelements eine Demontage des Siebbands entfällt.

Ein besonders bevorzugtes Ausführungsbeispiel zeichnet sich dadurch aus, daß das erste Lagerauge eine Öffnungsweite aufweist, die etwa gleich, vorzugsweise etwas geringer, dem Durchmesser beziehungsweise Querschnitt des stabförmigen Verbindungselements ist. Somit kann das Rechenhakenelement einfach von seiner Schwenkachse abgenommen werden, wenn ein Austausch dieses Rechenhakenelements erfolgen soll.

In einer Weiterbildung der Erfindung ist vorgesehen, daß das erste Lagerauge des Rechenhakenelements im Bereich seiner Randöffnung mit einem Verschlußmittel verschließbar ist, das vorzugsweise an die Kontur der Randöffnung angepaßt ist. Somit läßt sich das Rechenhakenelement auf dem stabförmigen Verbindungselement einfach anbringen und mit dem Verschlußmittel fixieren, so daß das Verschlußmittel als Sicherungselement dient.

Bei einem bevorzugten Ausführungsbeispiel ist vorgesehen, daß mindestens eine die Randöffnung begrenzende Fläche des ersten Lagerauges eine Rastvorrichtung aufweist, die mit einer Gegenrastvorrichtung am Verschlußmittel zusammenwirkt. Damit kann das Verschlußmittel sicher in der Randöffnung gehalten werden, wodurch auch das Rechenhakenelement sicher auf dem Verbindungselement schwenkbar gehalten ist.

In besonders bevorzugter Ausführungsform ist vorgesehen, daß die Rast- und Gegenrastvorrichtung jeweils durch mehrere Rastnasen und Rastvertiefungen gebildet sind, wobei die Rastnasen der Rastvorrichtung in die Rastvertiefungen der Gegenrastvorrichtung und umgekehrt eingreifen. Es ist hier eine Sicherungsvorrichtung für das Verschlußmittel realisiert, die einen sicheren Halt des Verschlußmittels in der Randöffnung ermöglicht, wobei die Rast- und Gegenrastvorrichtung sägezahnartig ineinandergreifen.

In bevorzugter Ausführungsform weist der Umlauf-Siebrechen mehrere Rechenhakenelemente auf, von denen jeweils eines zwischen zwei Platten eines Siebelements schwenkbar angeordnet ist, so daß eine Rechenhakenelementreihe mit mehreren Rechenzinken realisiert ist. Vorzugsweise ist dabei vorgesehen, daß zumindest ein Rechenhakenelement über den Lenkhebel angetrieben ist. In bevorzugter Ausführungsform ist dabei vorgesehen, die Rechenhakenelemente einer auch als Rechen bezeichneten Rechenhakenelementreihe zur Synchronisation ihrer Bewegung starr miteinander zu verbinden. Die starke Verbindung kann durch ein Verbindungsstück realisiert sein, das stabförmig ausgebildet ist, das die Rechenhakenelemente einer Rechenhakenelementreihe durchgreift.

Ein bevorzugtes Ausführungsbeispiel des Umlauf-Siebrechens zeichnet sich dadurch aus, daß mehrere Siebelemente des Siebbands jeweils eine Rechenhakenelementreihe aufweisen, wobei die Rechenhakenelemente einer Rechenhakenelementreihe von einem stabförmigen Verbindungselement durchgriffen sind, das die Schwenkachse der Rechenhakenelementreihe beziehungsweise des Rechens bildet.

Eine bevorzugte Ausführungsform zeichnet sich dadurch aus, daß die starre Verbindung für die Synchronisation der Bewegung der Rechenhakenelementre in den Übergangsbereichen zwischen den Schenkeln und den Basen der L-förmigem Rechenhakenelemente vorgesehen ist. Die starre Verbindung kann insbesondere dadurch realisiert werden, daß die zweiten Lageraugen der Rechenhakenelemente von einem durchgehenden beziehungsweise stabförmigen Verbindungsstück durchgriffen sind.

Ein besonders bevorzugtes Ausführungsbeispiel zeichnet sich dadurch aus, daß der Schenkel mit der Basis einen Winkel einschließt, der kleiner 90° ist, wobei die Länge des Schenkels so bemessen ist, daß eine auf der Basis etwa mittig stehende, gedachte Normale das Schenkelende insbesondere im Bereich des ersten Lagerauges schneidet. Das Rechenhakenelement ist somit derart angetrieben, daß das erste und zweite Lagerauge zwar auf einer gedachten Linie liegen, diese gedachte Linie jedoch nicht mit der Längserstreckungsrichtung des Lenkhebels zusammenfällt. Damit wird vermieden, daß das Rechenhakenelement in eine falsche Richtung geschwenkt wird.

Insbesondere ist das erste Lagerauge des Rechenhakenelements so orientiert, daß die Randöffnung des ersten Lagerauges im wesentlichen in Längserstreckungsrichtung des Schenkels, also in Richtung der gedachten Verbindungslinie und von der Basis abgewandt liegt. Die Randöffnung des zweiten Lagerauges erstreckt sich etwa rechtwinklig zu dieser gedachten Verbindungslinie, wobei diese Randöffnung am Schenkel liegt. Einerseits ist damit gewährleistet, daß das Rechenhakenelement leicht mit dem stabförmigen Verbindungselement der Siebelemente und dem Lenkhebel verbunden werden kann, andererseits jedoch eine leichte Auswechselbarkeit des Rechenhakenelements gegeben ist.

Bei einem Ausführungsbeispiel ist das Siebband über zwei Umlenkeinrichtungen geführt, die an einem teleskopartig ausziehbaren Tragrahmen angeordnet sind. Der Tragrahmen ist in seiner jeweiligen Ausziehstellung festlegbar. Durch Verwendung des erfindungsgemäßen Umlauf-Siebrechens, bei dem auf eine Führungsbahn verzichtet werden kann, ist es damit besonders einfach möglich, den Umlauf-Siebrechen durch den teleskopartig ausziehbaren Tragrahmen zu spannen. Zudem ist es auf einfache Art und Weise möglich, die Förderhöhe zu variieren. Hierzu kann zumindest ein weiteres Siebelement in den Umlauf-Siebrechen eingesetzt werden, wobei der so verlängerte Umlauf-Siebrechen durch den teleskopartig ausziehbaren Tragrahmen wiederum gespannt werden kann. Mit dem Tragrahmen ist also auf besonders einfache Art und Weise ein Spannen des Umlauf-Siebrechens und eine Anpassung an unterschiedliche Förderhöhen möglich.

In bevorzugter Ausgestaltung weist der Tragrahmen des Umlauf-Siebrechens zumindest zwei Teilrahmen auf, die verschieblich miteinander verbunden sind, so daß die vorstehend erwähnte teleskopartige Verlängerung des Tragrahmens ermöglicht wird. Als Profile für die Teilrahmen können beispielsweise Rohrprofile verwendet werden, die einfach ineinander steckbar sind.

In besonders bevorzugter Ausführungsform weist der Tragrahmen des Umlauf-Siebrechens einen dritten Teilrahmen auf, der zwischen dem ersten und zweiten Teilrahmen angeordnet ist, wobei zumindest der erste Teilrahmen verschieblich mit dem dritten Teilrahmen verbunden ist. Der dritte Teilrahmen kann in verschiedenen Längen bereitgestellt werden, so daß zusätzlich zu der teleskopartigen Verlängerung des Tragrahmens eine Verlängerungsmöglichkeit gegeben ist. Es wird hier also eine Art Baukastensystem bereitgestellt, bei dem der erste und zweite Teilrahmen für jede Förderhöhe verwendet werden können und lediglich eine Längenanpassung des dritten Teilrahmens vorgesehen sein kann.

Weitere vorteilhafte Ausgestaltungen ergeben sich aus den Unteransprüchen.

Die Erfindung wird anhand von Ausführungsbeispielen mit Bezug auf die Zeichnung näher erläutert. Es zeigen:
- Figur 1: einen Umlauf-Siebrechen,
- Figur 2: den Umlauf-Siebrechen der Figur 1 in Detailansicht im Bereich einer oberen und unteren Umlenkeinrichtung,
- Figur 3: ausschnittweise einen Tragrahmen mit einer oberen Umlenkeinrichtung für einen Umlauf-Siebrechen,
- Figur 4: ein Rechenhakenelement eines Umlauf-Siebrechens mit einem Verschlußmittel,
- Figur 5: das Rechenhakenelement der Figur 4 mit dem entkoppelten Verschlußmittel,
- Figuren 6A bis 6C: jeweils ein Ausführungsbeispiel einer Platte beziehungsweise Steuerlasche eines Siebelements,
- Figur 7: ein Ausführungsbeispiel eines Siebbands ausschnittweise in Seitenansicht und Draufsicht, und
- Figur 8: eine Prinzipdarstellung eines Bewegungsablaufs eines Rechenhakenelements im Bereich einer Umlenkeinrichtung.

Umlauf-Siebrechen der hier angesprochenen Art werden insbesondere für die mechanische Vorreinigung von mit Feststoffen belasteten flüssigen Medien, insbesondere Wasser, verwendet. Der Umlauf-Siebrechen ist vorzugsweise in einem Gerinne beziehungsweise Kanal angeordnet, in dem das zu reinigende Medium fließt beziehungsweise durch Pumpen gefördert ist. Die Höhe des Umlauf-Siebrechens ist größer gewählt als die Tiefe des Gerinnes beziehungsweise des Kanals, so daß die ausgefilterten Feststoffe aus dem Gerinne beziehungsweise dem Kanal herausbefördert werden können.

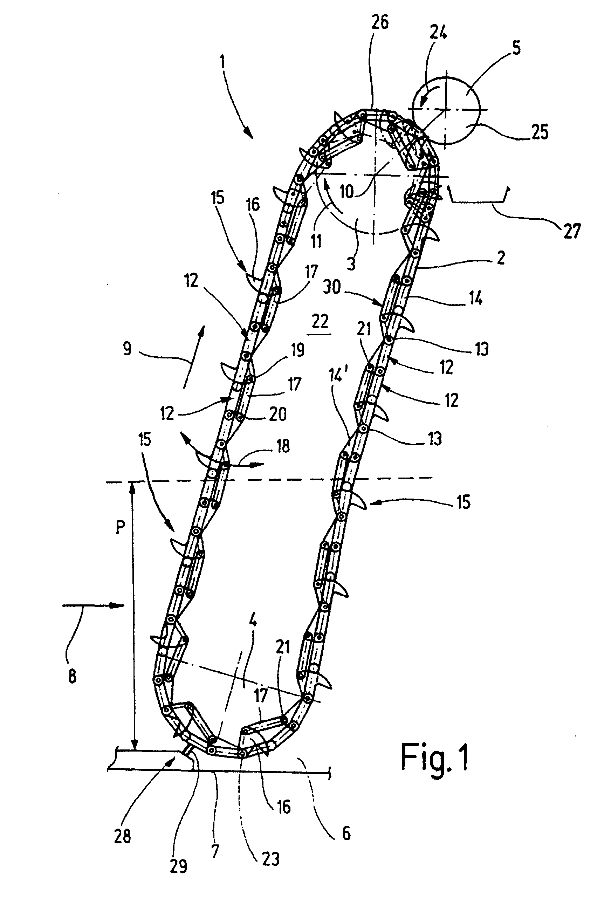

Figur 1 zeigt einen Umlauf-Siebrechen 1, von dem ein antreibbares, endloses Siebband 2, eine obere und untere Umlenkeinrichtung 3 und 4 und ein Reinigungselement 5 für das Siebband 2 dargestellt sind, wobei die obere und untere Umlenkeinrichtung 3 und 4 sowie das Reinigungselement 5 lediglich angedeutet sind.

Der Umlauf-Siebrechen 1 ist in einem Gerinne 6 angeordnet, von dem lediglich ausschnittweise ein Boden 7 wiedergegeben ist. Im Gerinne 6 kann ein zu reinigendes Medium, insbesondere Wasser, in Pfeilrichtung 8 fließen beziehungsweise gefördert werden. Die Höhe des Gerinnes 6 beziehungsweise des Kanals beziehungsweise der Pegel P des zu reinigenden Mediums ist geringer als die Höhe des Umlauf-Siebrechens 1.

Um die mittels des Siebbands 2 ausgefilterten Feststoffe aus dem Gerinne 6 abtransportieren zu können, ist das Siebband 2 in Förderrichtung 9 angetrieben. Hierzu kann vorgesehen sein, daß der oberen Umlenkeinrichtung 3 ein Antrieb (nicht dargestellt) zugeordnet ist, der die obere Umlenkeinrichtung 3 um deren Drehachse 10 in Pfeilrichtung 11 antreibt.

Das Siebband 2 umfaßt mehrere aneinandergereihte Siebelemente 12, die nach Art einer endlosen Gliederkette miteinander jeweils über ein stabförmiges Verbindungselement 13 relativ zueinander schwenkbar verbunden sind. Jeweils ein Siebelement 12 wird durch mehrere parallel und in einem Abstand zueinander angeordnete längliche Platten 14 gebildet, wobei die Platten 14 zweier Siebelemente 12 zumindest bereichsweise ineinandergreifen, so daß die schwenkbare Verbindung mit dem stabförmigen Verbindungselement 13 möglich ist.

Einigen Siebelementen 12 ist jeweils eine Rechenhakenelementreihe 15 zugeordnet, die mehrere Rechenhakenelemente 16 umfaßt. Die im folgenden lediglich als Rechenelemente bezeichneten Rechenhakenelemente 16 sind über einen Lenkhebel 17 derart angetrieben, daß sie zwischen zwei nebeneinanderliegenden Platten 14 drehbar zumindest teilweise hindurchverlagerbar sind, wie dies durch den Doppelpfeil 18 angedeutet ist. Der Lenkhebel 17 ist mit seinem einen Ende 19 schwenkbar an einem Rechenelement 16 angelenkt und mit seinem anderen zweiten Ende 20 am Siebband 2 schwenkbar gelagert. Insbesondere ist vorgesehen, daß das zweite Ende 20 des Lenkhebels 17 an dem Siebelement 12 schwenkbar befestigt ist, das dem Siebelement 12 -in Förderrichtung 9 des Siebbands 2 gesehen-, welches ein Rechenelement 16 aufweist, nachgeordnet ist. Für die Anlenkung des Lenkhebels 17 am Siebband 2 ist vorzugsweise eine auch als Steuerlasche bezeichnete Platte 14' des nachgeordneten Siebelements 12 mit einem Anlenkpunkt 21 versehen, der aus dem Bereich der übrigen, länglichen Platten 14 herausragt beziehungsweise in den von dem Siebband 2 umschlossenen Bereich 22 hineinragt. Es ist jedoch auch möglich, das zweite Ende 20 des Lenkhebels 17 an einem stabförmigen Verbindungselement 13 zu lagern.

Im Bereich der Umlenkeinrichtungen 3 und 4 wird der Abstand zwischen einem Anlenkpunkt 21 und einem Rechenelement 16 im Bereich seiner schwenkbaren Verbindung mit dem Lenkhebel 17 verkürzt. Dadurch wird das Rechenelement 16 um seine Schwenkachse 23 in den Bereich 22 hinein verschwenkt, und zwar maximal so weit, daß das Rechenelement 16 nach außen aus dem Siebband 2 nicht mehr herausragt. Wenn dieses Rechenelement 16 wieder aus dem Bereich der Umlenkeinrichtung 3 beziehungsweise 4 heraustritt, ist das Rechenelement 16 wieder zwischen zwei Platten 14 hindurchverlagert, so daß die im folgenden lediglich als Rechen bezeichnete Rechenhakenelementreihe 15 zur Aufnahme von Feststoffen bereitgestellt ist.

In Figur 1 ist noch das Reinigungselement 5 dargestellt, welches der oberen Umlenkeinrichtung 3 zugeordnet und vorzugsweise als in Pfeilrichtung 24 rotierende Reinigungsbürste 25 realisiert ist. Das Reinigungselement 5 ist vorzugsweise in dem Bereich der oberen Umlenkeinrichtung 3 angeordnet, in dem die Rechenelemente 16 eines Rechens 15 im wesentlichen nicht über das Siebband 2 hinausstehen. Dadurch kann die gesamte Siebfläche 26 des Siebbands 2 mittels der Reinigungsbürste 25 gereinigt werden. Die von der Siebfläche 26 abfallenden beziehungsweise von dem Reinigungselement 5 abgetragenen, ausgefilterten Feststoffe können einem Auffangbehälter 27 zugeführt werden. Der Auffangbehälter 27 ist dem Umlauf-Siebrechen 1 etwa im Bereich der oberen Umlenkeinrichtung 3 zugeordnet.

Selbstverständlich ist es auch möglich, im Bereich 22, also in dem vom Siebband 2 umschlossenen Raum, ein Reinigungselement vorzusehen, das wie das Reinigungselement 5 ausgebildet sein kann. Alternativ ist es auch möglich, eine Bürstenleiste (nicht dargestellt) vorzusehen, die beispielsweise schwenkbar an die Innenseite 30 des Siebbands 2 heranbringbar ist. Alternativ oder zusätzlich können auch Reinigungselemente vorgesehen sein, die düsenartig ausgebildet sind, so daß das Siebband 2 mit einem Mediumstrahl, vorzugsweise Wasserstrahl, gereinigt werden kann. Selbstverständlich können auch Schwämme umfassende Vorrichtungen, Abstreifflächen oder von innen oder außen eingreifende Reinigungskämme vorgesehen sein.

Auf dem Boden 7 des Gerinnes 6 ist eine sogenannter Sohlsprung 28 realisiert, der bezüglich seiner Höhe relativ gering ausgestaltet ist, da die Rechen 15 im Bereich der unteren Umlenkeinrichtung 4 -wie bereits erwähnt- eingezogen werden und daher nicht in Berührung mit dem Boden 7 treten. Im Bereich des Sohlsprungs 28 ist noch ein Abdichtelement 29 vorgesehen, das als Bürste realisiert sein kann, so daß im wesentlichen kein Medium den Umlauf-Siebrechen 1 beziehungsweise das Siebband 2 ungefiltert passieren kann.

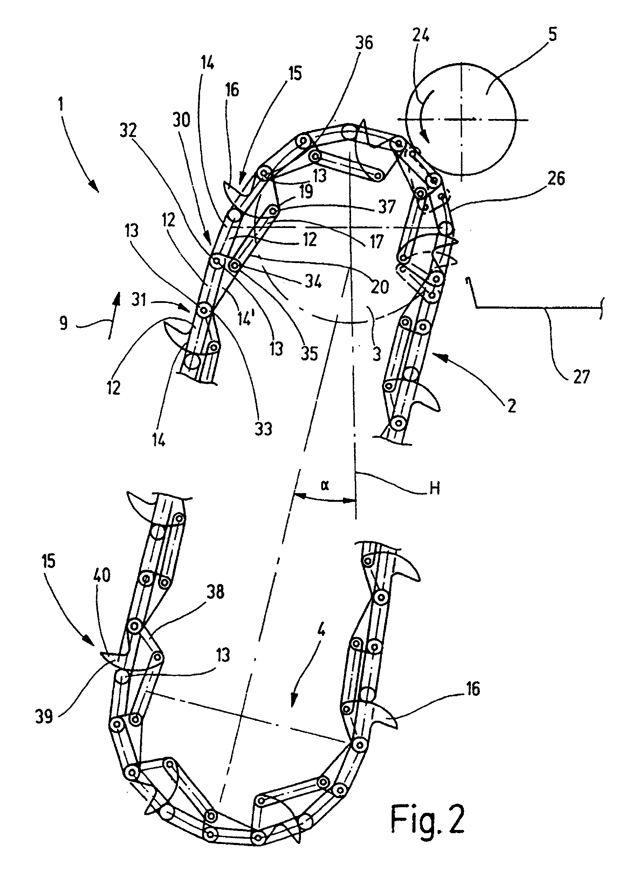

Figur 2 zeigt den Umlauf-Siebrechen 1 der Figur 1 ausschnittweise im Bereich der oberen und unteren Umlenkeinrichtung 3 und 4. Gleiche Teile wie in Figur 1 sind mit denselben Bezugszeichen versehen, insofern wird auf deren Beschreibung verwiesen.

In Figur 2 ist deutlich zu erkennen, daß zumindest eine auch als Steuerlasche bezeichnete Platte 14' eines Siebelements 12 im wesentlichen dreieckförmig realisiert ist. Selbstverständlich ist es auch möglich, die Platte 14' L-förmig auszubilden. Zwei -in Förderrichtung 9 gesehen- hintereinander liegende Eckbereiche 30 und 31 der Platte 14' weisen jeweils ein Lagerauge 32 beziehungsweise 33 auf, welches jeweils von einem stabförmigen Verbindungselement 13 durchgriffen ist. Die Platte 14' ist somit mit -in Förderrichtung 9 gesehen- einer Platte 14 eines vor- und nachgeordneten Siebelements 12 des Siebbands 2 schwenkbar verbunden.

Am dritten Eckbereich 34 der Platte 14' ist ein weiteres, drittes Lagerauge 35 vorgesehen, an dem der Lenkhebel 17 mit seinem zweiten Ende 20 schwenkbar angelenkt ist. Der Lenkhebel 17 überbrückt mit seiner Länge ein Siebelement 12 und ist mit seinem anderen Ende 19 in einem Lagerauge 37 des Rechenelements 16 eines Rechens 15 schwenkbar angelenkt. Das Rechenhakenelement 16 weist außerdem ein erstes Lagerauge 36 auf, durch das ein stabförmiges Verbindungselement 13 hindurchtritt. Dieses stabförmige Verbindungselement 13 bildet somit die Schwenkachse für das Rechenelement 16.

Zur Ausbildung eines Rechens 15 weist ein Siebelement 12 mehrere hintereinanderliegende Rechenhakenelemente 16 auf, so daß sich der Rechen 15 in die Bildebene beziehungsweise Zeichnungsebene hinein erstreckt und eine Rechenhakenelementreihe realisiert ist. Vorzugsweise ist vorgesehen, daß lediglich ein Rechenelement 16 des Rechens 15 über den Lenkhebel 17 angetrieben ist. Die übrigen Rechenelemente 16 eines Rechens 15 sind vorzugsweise starr mit dem über den Lenkhebel 17 angetriebenen Rechenelement 16 verbunden, so daß diese zwangsweise mitgeführt werden um die Bewegung der Rechenelemente 16 zu synchronisieren.

In Figur 2 ist weiterhin ersichtlich, daß durch die Umlenkeinrichtungen 3 und 4 die Siebelemente 12 umlaufend geführt werden. Im Bereich der oberen und unteren Umlenkeinrichtung 3 und 4 wird durch deren kreisförmige Kontur bewirkt, daß die Siebelemente 12 relativ zueinander verschwenkt werden. Dadurch wird der Anlenkpunkt 21 beziehungsweise das dritte Lagerauge 35 der Platte 14' auf das erste Lagerauge 36 des Rechenelements 16 zu bewegt, so daß das Rechenelement 16 um das stabförmige verbindungselement 13 nach innen in den Bereich 22 verschwenkt wird. Wie weit das Rechenelement 16 beim Umlaufen um die jeweiligen Umlenkeinrichtungen 3 und 4 in das Siebband 2 eingezogen wird, hängt von dem Durchmesser der Umlenkeinrichtungen ab. Vorzugsweise weisen die Umlenkeinrichtungen 3 und 4 einen Durchmesser derart auf, daß das Rechenelement 16 im wesentlichen vollständig beim Überlaufen der Umlenkeinrichtungen 3 beziehungsweise 4 eingezogen wird. Die Umlenkeinrichtungen 3 und 4 sind vorzugsweise als zwei in einem Abstand zueinander liegende, drehbar gelagerte Kettenräder realisiert.

Das Rechenelement 16 weist vorzugsweise eine Breite beziehungsweise Dicke derart auf, daß zwischen zwei dem Rechenelement 16 zugeordneten Platten 14 im wesentlichen kein Spalt gebildet wird. Auszufilternde Feststoffe gelangen deshalb nicht durch das Siebband 2 hindurch. Vorzugsweise liegen die Platten 14 an den Seitenflächen eines Rechenelements 16 an. Beim Einziehen des Rechenelements 16 werden an ihm haftende Feststoffe quasi abgestrichen und auf der Siebfläche 26 abgelagert. Damit ist gewährleistet, daß die Rechenelemente 16 beim Überlaufen der Umlenkeinrichtungen 3 und 4 gereinigt werden. Die Siebfläche 26 des Siebbands 2 kann dann leicht mit dem Reinigungselement 5 gesäubert werden, so daß die ausgefilterten Feststoffe einfach in den Auffangbehälter 27 gebracht werden können. Auch im Bereich der unteren Umlenkeinrichtung 4 werden die Rechenelemente 16 ein- und ausgefahren, so daß das auch als Bürste realisierbare Abdichtelement 29 (Figur 1) auf der Siebfläche 26 dichtend anliegen kann. Die untere Umlenkeinrichtung 4 kann einen etwas größeren Durchmesser als die obere Umlenkeinrichtung 3 aufweisen, so daß die Rechenelemente 16 im eingefahrenen Zustand nicht über die Siebfläche 26 hervorstehen, so daß bezüglich des Abdichtelements 29 und der Siebfläche 26 eine bestmögliche Abdichtung gewährleistet ist.

Figur 2 zeigt noch, daß das Rechenelement 16 im wesentlichen L-förmig realisiert ist, wobei an dem Schenkel 38 des L's die Lageraugen 36 und 37 ausgebildet sind. Die Basis 39 des L's bildet einen Rechenzinken 40 des Rechenelements 16 aus. Die Kontur der Basis 39 ist so gewählt, daß in jeder Schwenkstellung des Rechenelements 16 eine Spaltbildung mit dem stabförmigen Verbindungselement 13 vermieden wird, so daß hier keine Feststoffe durch das Siebband 2 hindurchtreten können.

Der Umlauf-Siebrechen 1 ist vorzugsweise unter einem Winkel α bezüglich einer gedachten Horizontalen H ausgerichtet, so daß auf dem Rechen 15 abgelagerte Feststoffe sicher zum Auffangbehälter 27 transportiert werden können. Der Winkel α beträgt vorzugsweise circa 15°.

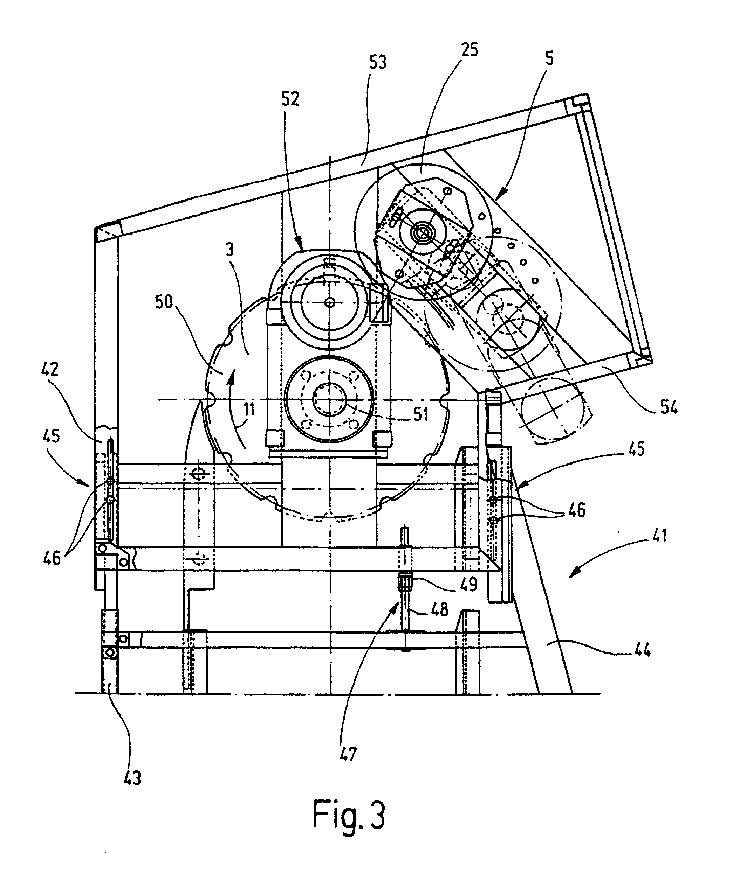

In Figur 3 ist ein Tragrahmen 41 für den Umlauf-Siebrechen 1 wiedergegeben. Der Tragrahmen 41 umfaßt zumindest zwei Teilrahmen 42 und 43, die relativ zueinander verschiebbar sind. Die Länge beziehungsweise Höhe des Tragrahmens 41 ist somit teleskopartig verstellbar. Hierzu ist insbesondere vorgesehen, daß der Tragrahmen 41 eine Tragstrebe 44 aufweist, an der der zweite Teilrahmen 43 fest angebracht ist. Die Tragstrebe 44 ist hinsichtlich ihrer Tragfähigkeit so ausgebildet, daß sie die übrigen Rahmenteile des Tragrahmens 41 sowie die Bauteile des Umlauf-Siebrechens 1 trägt. Insbesondere ist dies durch den in einem Winkel α angeordneten Umlauf-Siebrechen 1 möglich, da dann die Gewichtskraft des Umlauf-Siebrechens und der übrigen Rahmenteile des Tragrahmens 41 von der Tragstrebe 44 aufgenommen werden können. Dadurch ist es möglich, die Teilrahmen 42 und 43 besonders einfach auszuführen, da diese zumindest nicht Hauptbestandteil der das Gewicht tragenden Einrichtung sind.

Für die teleskopartige Ausziehbewegung des Tragrahmens 41 weist die Tragstrebe 44 eine Gleiteinrichtung 45 auf, auf der der erste Teilrahmen 42 verschiebbar aufliegt. Für die Festlegung des ersten Teilrahmens 42 bezüglich des zweiten Teilrahmens 43 sind Klemmittel 46 vorgesehen. Zusätzlich oder alternativ kann die Verschiebebewegung des ersten Teilrahmens 42 bezüglich des zweiten Teilrahmens 43 mittels einer Verstellspindel 47 realisiert werden. Die Verstellspindel 47 kann durch einen Gewindestab 48 gebildet sein, auf dem eine Verstellmutter 49 aufgeschraubt ist. Mit der Verstellspindel 47 läßt sich die Länge beziehungsweise Höhe des Tragrahmens 41 besonders genau einstellen. Insbesondere ist vorgesehen, daß die Verstellspindel 47 dazu dient, den Abstand der oberen Umlenkeinrichtung 3 bezüglich der unteren Umlenkeinrichtung 4 (Figur 1) zu verändern, wodurch das Siebband 2 zwischen den beiden Umlenkeinrichtungen 3 und 4 nach Art einer Gliederkette gespannt werden kann. Die untere Umlenkeinrichtung 4 ist vorzugsweise an dem zweiten Teilrahmen 43 angebracht. Selbstverständlich ist es auch möglich, einen separaten, dritten Teilrahmen (nicht dargestellt) vorzusehen, der zwischen dem ersten und zweiten Teilrahmen 42 und 43 anordenbar ist. Dritte Teilrahmen können in ihrer jeweiligen Länge variabel ausgestaltet sein, so daß der Tragrahmen 41 an unterschiedliche Förderhöhen des Umlauf-Siebrechen 1 anpaßbar ist.

Figur 3 zeigt noch, daß die obere Umlenkeinrichtung 3 mit einem Kettenrad 50 realisiert ist. Ein zweites Kettenrad (nicht dargestellt) liegt deckungsgleich zum Kettenrad 50. Beide Kettenräder liegen in einem Abstand zueinander und können über eine Welle 51 miteinander gekoppelt sein. Die beiden Kettenräder liegen derart in einem Abstand zueinander, daß darauf die Siebbandränder des Siebbands 2 aufliegen, um so das Siebband 2 in Förderrichtung antreiben zu können.

Dem Kettenrad 50 beziehungsweise der Welle 51 ist ein Antrieb 52 zugeordnet, der als Elektromotor realisierbar ist und die obere Umlenkeinrichtung 3 zumindest in Pfeilrichtung 11 antreibt.

Wie bereits im Zusammenhang mit den Figuren 1 und 2 erwähnt, ist im Bereich der oberen Umlenkeinrichtung 3 ein Reinigungselement 5 angeordnet, das mit der Siebfläche 26 des Siebbands 2 zusammenwirkt. Das Reinigungselement 5 kann als Reinigungsbürste 25 ausgebildet sein, die gegebenenfalls über den Antrieb 52 in Rotation versetzt werden kann. Das Reinigungselement 5 beziehungsweise die Reinigungsbürste 25 ist innerhalb eines Gehäuses 53, welches zumindest die obere Umlenkeinrichtung 3 abdeckt, hinsichtlich einer Abwurföffnung 54 des Gehäuses 53 verlagerbar. Unterhalb der Abwurföffnung 54 kann sich der vorstehend beschriebene Auffangbehälter 27 befinden. Anstelle des Auffangbehälters 27 können auch Einrichtungen zur Behandlung des Rechengutes angeordnet sein, die beispielsweise eine Wasch-, Preß- oder Fördereinrichtung für das Rechengut sein können. Diese Einrichtungen zur Behandlung des Rechengut können ohne weiteres an der stabilen Tragstrebe 44 befestigt werden.

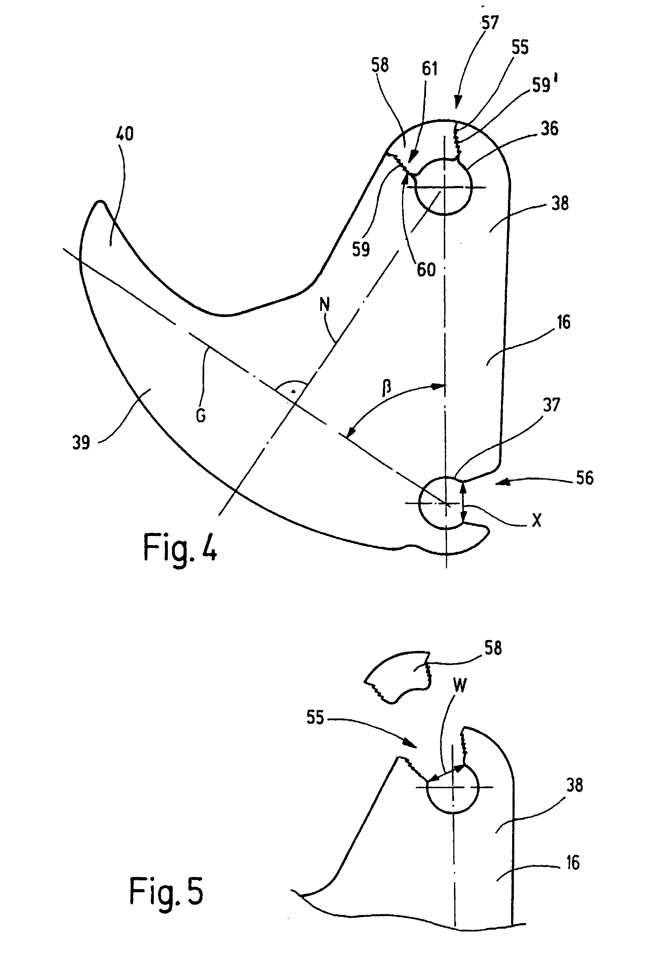

In Figur 4 ist ein bevorzugtes Ausführungsbeispiel eines auch als Rechenhakenelement bezeichneten Rechenelements 16 des Umlauf-Siebrechens 1 dargestellt. Das Rechenelement 16 ist im wesentlichen L-förmig realisiert, wobei die Basis 39 den Rechenzinken 40 ausbildet und der Schenkel 38 die beiden Lageraugen 36 und 37 aufweist. Beide Lageraugen 36 und 37 sind randoffen ausgeführt und weisen mithin jeweils eine Randöffnung 55 beziehungsweise 56 auf. Wie bereits erwähnt, tritt durch das erste Lagerauge 36 das stabförmige Verbindungselement 13 zweier Siebelemente 12 hindurch. Das erste Lagerauge 36 bildet somit die Schwenkachse beziehungsweise einen Schwenkpunkt für das Rechenelement 16. Das zweite Lagerauge 37 ist mit dem Lenkhebel 17 verbunden, so daß der Antrieb des Rechenelements 16 in diesem zweiten Lagerauge 37 mit einem Verbindungsstück ankoppelbar ist.

Die Randöffnung 55 beziehungsweise das Lagerauge 36 ist derart orientiert, daß die Randöffnung 55 an dem freien Ende 57 des Schenkels 38 liegt. Mit anderen Worten: Die Randöffnung 55 des ersten Lagerauges 36 liegt im wesentlichen in Längserstrekkungsrichtung des Schenkels 38 und von der Basis 39 abgewandt. Die Randöffnung 56 des zweiten Lagerauges 37 öffnet sich etwa rechtwinklig zum Schenkel 38 und liegt auf der Seite des Schenkels 38, also vom Rechenzinken 40 abgewandt.

Durch die Randöffnung 55 kann das Rechenelement 16 in ein bereits vorgefertigtes beziehungsweise vormontiertes Siebband 2 eingesetzt werden. Das Rechenelement 16 kann also auf einfache Art und Weise auf das stabförmige Verbindungselement 13 aufgesteckt werden. Damit das Rechenelement 16 nicht ungewollt wieder von dem Verbindungselement 13 abrutschen kann, ist der Randöffnung 55 ein Verschlußmittel 58 zugeordnet, das die Randöffnung 55 verschließt. Das Verschlußmittel 58 ist vorzugweise an die Kontur der Randöffnung 55 angepaßt. Damit das Verschlußmittel 58 sicher in der Randöffnung 55 gehalten werden kann, ist zumindest eine die Randöffnung 55 begrenzende Fläche 59, vorzugsweise jedoch beide Flächen 59 und 59', mit einer Rastvorrichtung 60 versehen, die mit einer Gegenrastvorrichtung 61 am Verschlußmittel 58 zusammenwirkt. In bevorzugter Ausführungsform sind die Rast- und Gegenrastvorrichtungen 60 beziehungsweise 61 durch mehrere Rastnasen und Rastvertiefungen gebildet, die einen sägezahnartiger Eingriff zwischen dem Verschlußmittel 58 und dem Rechenelement 16 ermöglichen. Die Rastnasen der Rastvorrichtung 60 greifen bei eingesetztem Verschlußmittel 58 in die Rastvertiefungen der Gegenrastvorrichtung und die Rastnasen der Gegenrastvorrichtung 61 in die Rastvertiefungen der Rastvorrichtung 60 ein.

Damit das Rechenelement 16 auf das Verbindungselement 13 aufsteckbar ist, weist die Randöffnung 55 eine Öffnungsweite W (Figur 5) auf, die etwa gleich dem Querschnitt beziehungsweise dem Durchmesser des stabförmigen Verbindungselements 13 ist. Damit kann das Rechenelement 16 einfach auf das Verbindungselement 13 aufgesteckt werden.

Die Öffnungsweite X der Randöffnung 56 des zweiten Lagerauges 37 ist vorzugsweise etwas geringer als der Durchmesser eines Verbindungsstücks zwischen dem Rechenelement 16 und dem Lenkhebel 17. Mithin wird eine Art Clipsverbindung realisiert, so daß der Antrieb des Rechenelements 16 über den Lenkhebel 17 sicher erfolgen kann, wobei dennoch eine Lösbarkeit gegeben ist. Es kann auch vorgesehen sein, die Randöffnung 56 mit einem Verschlußmittel zu verschließen, wie es im Zusammenhang mit der Randöffnung 55 bereits beschrieben wurde. Mithin zeichnet sich das Rechenelement 16 dadurch aus, daß es in ein vorgefertigtes Siebband 2 einsetzbar ist. Das heißt, das Siebband 2 kann bereits als endloses beziehungsweise geschlossenes Siebband vorliegen, bei dem die einzelnen Siebelemente 12 bereits mit den stabförmigen Verbindungselementen 13 miteinander verbunden sind. Dadurch ist es in vorteilhafter Weise möglich, ein beschädigtes Rechenelement 16, ohne irgendwelche Zerlegungen des Siebbands 2 vornehmen zu müssen, auszutauschen. Damit erhöht sich die Wartungsfreundlichkeit des Umlauf-Siebrechen 1 erheblich.

Mehrere Rechenhakenelemente 16 eines Rechens 15 beziehungsweise einer Rechenhakenelementreihe sind darüber hinaus mit einer starren Verbindung in ihrem jeweiligen zweiten Lagerauge 56 miteinander verbindbar. Lediglich ein Rechenelement 16 ist also über den Lenkhebel angetrieben. Die übrigen, nicht angetriebenen Rechenhakenelemente 16 sind somit zwangsweise geführt, wodurch eine Synchronisation der Bewegung der Rechenhakenelemente 16 eines Rechens 15 beziehungsweise einer Rechenhakenelementreihe gewährleistet ist.

Daß das Rechenelement 16 im wesentlichen L-förmig realisiert ist, heißt, daß der Schenkel 38 bezüglich einer entlang der Basis 39 verlaufenden, gedachten Linie G einen Winkel β einschließt, der kleiner 90° ist. Die Länge des Schenkels 38 ist vorzugsweise so bemessen, daß eine auf der Linie G etwa mittig stehende, gedachte Normale N das Schenkelende 57 beziehungsweise das erste Lagerauge 36 schneidet.

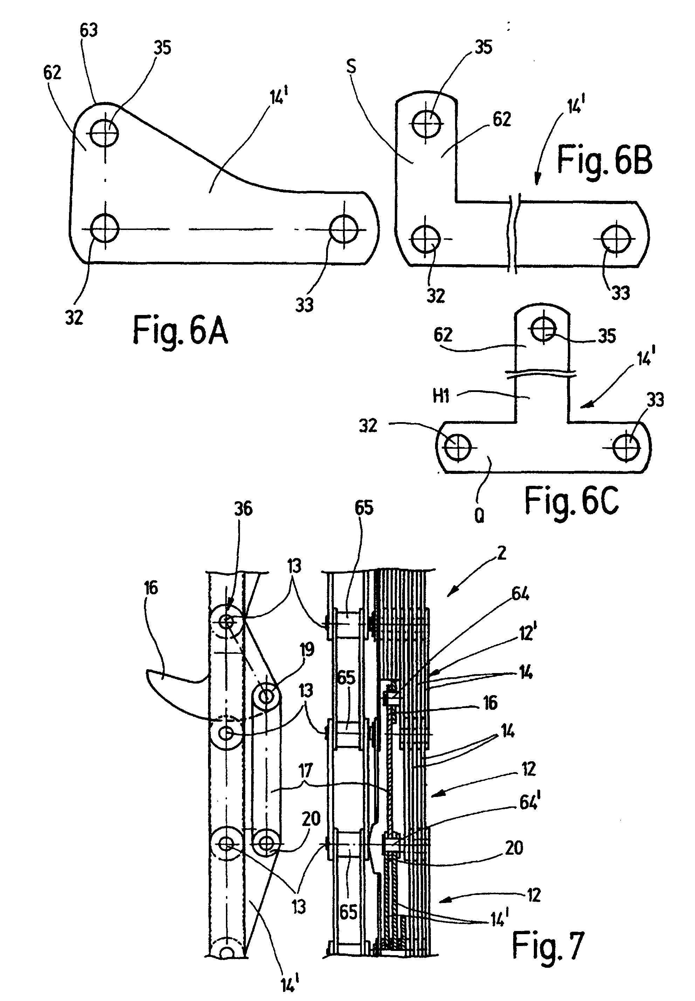

In Figur 6A ist die Platte beziehungsweise Steuerlasche 14' eines Siebelements 12 gezeigt. Durch die Lageraugen 32 und 33 tritt jeweils ein stabförmiges Verbindungselement 13 hindurch, so daß die Platte 14' mit der -in Förderrichtung 9 gesehenvorgeordneten und nachgeordneten Platte des entsprechenden Siebelements 12 schwenkbeweglich verbindbar ist. Die Steuerlasche 14' weist einen Fortsatz 62 auf, der sich im wesentlichen quer zur Längserstreckung der Steuerlasche 14' erstreckt. Am Ende 63 des Fortsatzes 62 ist das dritte Lagerauge 35 vorgesehen, an beziehungsweise in dem der Lenkhebel 17 schwenkbeweglich angelenkt ist. Die Steuerlasche 14' ist im wesentlichen dreieckförmig realisiert. Selbstverständlich ist es gemäß einem zweiten Ausführungsbeispiel auch möglich, die Steuerlasche 14' L-förmig auszubilden, wobei der Fortsatz 62 durch einen kurzen Schenkel S des L's gebildet ist, wie dies in Figur 6B gezeigt ist. Dadurch, daß das dritte Lagerauge 35 aus dem Bereich der Platten 14 des Siebbands 2 herausverlagert ist, kann auf einfache Art und Weise der Lenkhebel 17 vom Siebband 2 gelöst werden. Dies ist insbesondere beim Austausch eines beschädigten Lenkhebels 17 vorteilhaft. In Figur 6C ist ein drittes Ausführungsbeispiel einer Steuerlasche 14' dargestellt, die im wesentlichen T-förmig realisiert ist. Die T-förmige Steuerlasche besitzt einen Quersteg Q und einen Horizontalsteg H1, der etwa rechtwinklig vom Quersteg Q ausgeht. Der Horizontalsteg H1 bildet den Fortsatz 62. Gleiche Teile beziehungsweise gleich wirkende Teile sind in den Figuren 6A, 6B und 6C mit denselben Bezugszeichen versehen.

Figur 7 zeigt ausschnittweise ein Ausführungsbeispiel eines Siebbands 2. Die einzelnen Siebelemente 12 sind mit stabförmigen Verbindungselementen 13 miteinander schwenkbar verbunden. Einem Siebelement 12' ist zumindest ein Rechenelement 16 zugeordnet. Der Lenkhebel 17 ist einerseits über ein Verbindungsstück 64 an dem Rechenelement 16 schwenkbar befestigt. Das Verbindungsstück 64 durchgreift das zweite Lagerauge 37 des Rechenelements 16 und das erste Ende 19 des Lenkhebels 17. Mit seinem anderen Ende 20 ist er mit einem weiteren Verbindungsstück 64' zwischen zwei Platten 14' (Steuerlaschen) schwenkbeweglich gehalten, wobei das Verbindungsstück 64' das dritte Lagerauge 35 des Rechenelements 16 durchgreift. Selbstverständlich ist auch möglich, den Schwenkhebel 17 lediglich an einer Platte 14' schwenkbeweglich anzulenken. Es ist auch möglich, das Verbindungsstück 64 stabförmig auszubilden, so daß die Rechenelemente 16 einer Rechenhakenreihe starr miteinander verbunden sind, um die Ein- und Ausfahrbewegung der Rechenelemente zu synchronisieren.

Im Randbereich des Siebbands 2 sind zwischen zwei Platten 14 jeweils Distanzmittel 65 angeordnet, so daß eine Eingriffsmöglichkeit für das Kettenrad 50 gegeben ist. Der äußere Randbereich des Siebbands 2 bildet somit die Antriebskette aus. Selbstverständlich ist es möglich, beide Seitenränder des Siebbands 2 als Antriebskette vorzusehen.

Der Spalt zwischen zwei Platten 14 beziehungsweise 14' eines Siebelements 12 wird hier durch die Dicke der Platte 14 beziehungsweise 14' des vor- beziehungsweise nachgeschalteten Siebelements eingestellt. Selbstverständlich ist es auch möglich, den Spalt zwischen zwei Platten 14 durch Bestückung mit Distanzmitteln zu vergrößern. In bevorzugter Ausführungsform weist ein Siebelement 12 mehrere Rechenelemente 16 auf, wobei zwischen zwei benachbarten Rechenelementen zwei Platten 14 eines Siebelements liegen, zwischen denen kein Rechenelement vorgesehen ist. Vorzugsweise ist also jedem zweiten Spalt zwischen zwei Platten 14 ein Rechenelement 16 zugeordnet. Die Anzahl der Rechenelemente 16 pro Siebelement kann jedoch verändert werden. Darüber hinaus ist es möglich, die Rechenelemente 16 zweier Siebelemente 12 beziehungsweise 12' -in Förderrichtung 9 gesehen- versetzt zueinander anzuordnen.

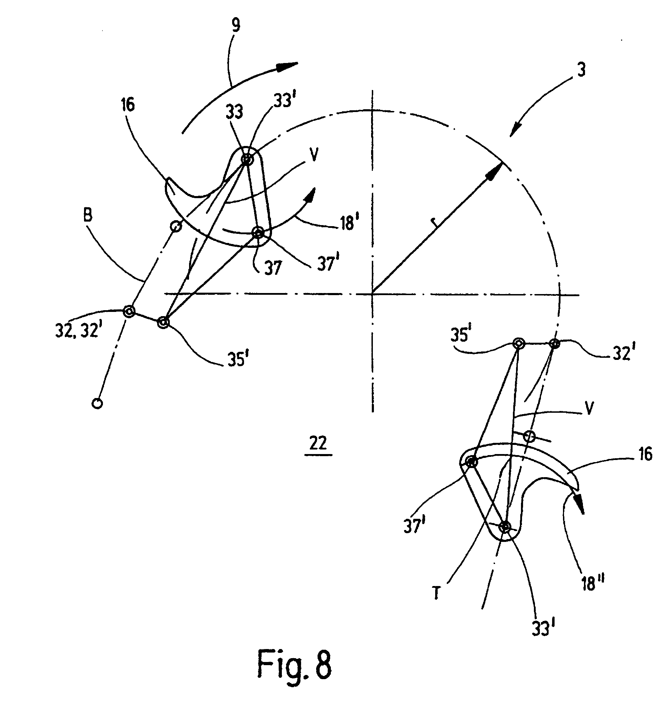

Anhand der Figur 8 werden die Ein- und Ausfahrbewegung während eines Umlaufens des Siebbands um eine Umlenkeinrichtung näher beschrieben. Das Ein- beziehungsweise Ausfahren beziehungsweise der Weg der bei dem Ein- und Ausfahrvorgang zurückgelegt wird, ist abhängig von dem Radius r der hier lediglich angedeuteten oberen Umlenkeinrichtung 3. Bei dem in Förderrichtung 9 bewegten Siebband 2, von dem hier lediglich die Bewegungsbahn B angedeutet ist, wird dadurch, daß der Lagerpunkt 37' im Lagerauge 37 nicht auf einer Verbindungslinie V liegt, die den Lagerpunkt 35' im Lagerauge 35 mit dem Lagerpunkt 33' im Lagerauge 33 verbindet, ein Drehmoment um den Lagerpunkt 33' in Pfeilrichtung 18' bewirkt, wodurch das Rechenhakenelement 16 quasi in das Siebband 2 hineinbewegt wird. Diese Einfahrbewegung des Rechenelements 16 erfolgt kontinuierlich bis der Lagerpunkt 33' nach dem Umlaufen um die Umlenkeinrichtung 3 wieder auf einem geraden Bereich der Bewegungsbahn B liegt. Dann beginnt die Ausfahrbewegung des Rechenhakens 16. Das Rechenelement 16 wird also um seinen Lagerpunkt 33' in Pfeilrichtung 18" bewegt, wodurch das Rechenelement 16 wieder in die ausgefahrene Position gebracht wurde. Die vollständig beziehungsweise maximale Ausfahrposition ist dann erreicht, wenn die Lagerpunkte 32' und 33' wieder auf dem geraden Bereich der Bewegungsbahn B liegen, wie dies in Figur 8 durch das von der Umlenkeinrichtung 3 ablaufende Rechenhakenelement 16 wiedergegeben ist.

Dadurch, daß die Lagerpunkte 33', 35' und 37' in keiner Stellung des Rechenelements 16 zusammen auf der gedachten Verbindungslinie V liegen, sondern der Lagerpunkt 37' außerhalb des Siebbands im Bereich 22 liegt, wird -sobald das Rechenelement 16 in den Bereich einer Umlenkeinrichtung 3 oder 4 eintritt- verhindert, daß das Rechenelement 16 ausanstatt eingefahren werden würde. Der Lagerpunkt 37' wird also beim Bewegen des Rechenelements 16 nicht soweit verlagert, daß er mit einem Totpunkt T zusammenfällt. Somit ist eine zuverlässige Steuerung beziehungsweise ein zuverlässiger Antrieb des Rechenelements 16 gewährleistet.

## Patentansprüche

1. Umlauf-Siebrechen (1) mit einem antreibbaren, endlosen Siebband (2), das durch mehrere Siebelemente (12) gebildet ist, die jeweils mehrere parallel und in einem Abstand zueinander angeordnete längliche Platten (14) aufweisen, wobei die Platten (14) an ihren beiden Enden jeweils von einem stabförmigen Verbindungselement (13) durchgriffen sind, das die zumindest bereichsweise ineinandergreifenden Platten (14) zweier Siebelemente (12) miteinander schwenkbar nach Art einer Gliederkette verbindet, mit einem schwenkbar gelagerten Rechenhakenelement (16), das zwischen zwei nebeneinander liegenden Platten (14) schwenkbar zumindest teilweise hindurchverlagerbar ist, und mit einem Lenkhebel (17) für das Rechenhakenelement (16), der mit seinem einen Ende (19) schwenkbar am Rechenhakenelement angelenkt ist, **dadurch gekennzeichnet, daß** das andere Ende (20) des Lenkhebels (17) am Siebband (2) schwenkbar gelagert ist.

2. Umlauf-Siebrechen nach Anspruch 1, **dadurch gekennzeichnet, daß** der Lenkhebel (17) mit seinem anderen Ende (20) an einem Siebelement (12) des Siebbands (2) schwenkbar gelagert befestigt ist, daß - in Förderrichtung (9) des Siebbands (2) gesehendem Siebelement (12), welches ein Rechenhakenelement (16) aufweist, nachgeordnet ist.

3. Umlauf-Siebrechen nach einem der vorhergehenden Ansprüche, **dadurch gekennzeichnet, daß** das andere Ende (20) des Lenkhebels (17) von dem stabförmigen Verbindungselement (13) durchgriffen ist.

4. Umlauf-Siebrechen nach einem der vorhergehenden Ansprüche, **dadurch gekennzeichnet, daß** zumindest eine Platte des Siebelements (12), an der der Lenkhebel (17) gelagert ist, als Steuerlasche (14') im wesentlichen dreieckförmig realisiert ist, wobei zwei Eckbereiche (30,31) von jeweils einem stabförmigen Verbindungselement (13) durchgriffen sind und an dem dritten Eckbereich (34) der Lenkhebel (17) schwenkbar gelagert angeordnet ist.

5. Umlauf-Siebrechen nach einem der Ansprüche 1 bis 3, **dadurch gekennzeichnet, daß** zumindest eine Platte des Siebelements (12), an der der Lenkhebel (17) gelagert ist, als Steuerlasche (14') im wesentlichen T-förmig realisiert ist, wobei die Enden des Querstegs (Q) des T's von jeweils einem stabförmigen Verbindungselement (13) durchgriffen sind und an dem freien Ende des Horizontalstegs (H1) des T's der Lenkhebel (17) schwenkbar gelagert angeordnet ist.

6. Umlauf-Siebrechen nach einem der Ansprüche 1 bis 3, **dadurch gekennzeichnet, daß** zumindest eine Platte (14) des Siebelements (12), an der der Lenkhebel (17) gelagert ist, als Steuerlasche (14') im wesentlichen L-förmig realisiert ist, wobei die Enden des langen Schenkels des L's jeweils von einem stabförmigen Verbindungselement (13) durchgriffen sind und an dem freien Ende des kurzen Schenkels (S) des L's der Lenkhebel (17) schwenkbar gelagert angeordnet ist.

7. Umlauf-Siebrechen nach Anspruch 4, 5 oder 6, **dadurch gekennzeichnet, daß** die Steuerlasche (14') ein drittes Lagerauge (35) aufweist, das an einem Fortsatz (62) des Dreiecks, T's oder L's ausgebildet ist, wobei sich der Fortsatz (62) quer zur Längserstreckung der Steuerlasche (14') erstreckt.

8. Umlauf-Siebrechen nach einem der vorhergehenden Ansprüche, **dadurch gekennzeichnet, daß** das Rechenhakenelement (16) an dem Verbindungselement (13) schwenkbar gelagert ist.

9. Umlauf-Sieb rechen nach einem der vorhergehenden Ansprüche, **dadurch gekennzeichnet, daß** das Rechenhakenelement (16) im wesentlichen L-förmig realisiert ist, daß das Rechenhakenelement (16) an dem freien Schenkelende (57) des L's schwenkbar zwischen den zwei Platten (14) eines Siebelements (12) gelagert ist, und daß das Rechenhakenelement (16) mit der Basis (39) des L's einen Rechenzinken (40) ausbildet.

10. Umlauf-Siebrechen nach einem der vorhergehenden Ansprüche, **dadurch gekennzeichnet, daß** im Übergangsbereich zwischen dem Schenkel (38) und der Basis (39) des L's der Lenkhebel (17) schwenkbar angelenkt ist.

11. Umlauf-Siebrechen nach einem der vorhergehenden Ansprüche, **dadurch gekennzeichnet, daß** das Rechenhakenelement (16) ein erstes Lagerauge (36) aufweist, durch das das stabförmige Verbindungselement (13) hindurchtritt.

12. Umlauf-Siebrechen nach einem der vorhergehenden Ansprüche, **dadurch gekennzeichnet, daß** das Rechenhakenelement (16) ein zweites Lagerauge (37) aufweist, so daß das Rechenhakenelement (16) mit einem Verbindungsstück (64) an dem Lenkhebel (17) schwenkbeweglich befestigbar ist.

13. Umlauf-Siebrechen nach einem der Ansprüche 11 und 12, **dadurch gekennzeichnet, daß** beide Lageraugen (36,37) je eine Randöffnung (55,56) aufweisen.

14. Umlauf-Siebrechen nach einem der Ansprüche 12 und 13, **dadurch gekennzeichnet, daß** die Öffnungsweite (X) der Randöffnung (56) des zweiten Lagerauges (37) etwas geringer ist als der Querschnitt des Verbindungsstücks (64).

15. Umlauf-Siebrechen nach einem der Ansprüche 11 und 13, **dadurch gekennzeichnet, daß** das erste Lagerauge (36) eine Öffnungsweite (W) aufweist, die etwa gleich, vorzugsweise etwas geringer, dem Durchmesser des stabförmigen Verbindungselements (13) ist.

16. Umlauf-Siebrechen nach einem der Ansprüche 11, 13 und 15, **dadurch gekennzeichnet, daß** das erste Lagerauge (36) im Bereich seiner Randöffnung (55) mit einem Verschlußmittel (58) verschließbar ist, das vorzugsweise an die Kontur der Randöffnung (55) angepaßt ist.

17. Umlauf-Siebrechen nach Anspruch 16, **dadurch gekennzeichnet, daß** mindestens eine die Randöffnung (55) begrenzende Fläche (59;59') des ersten Lagerauges (36) eine Rastvorrichtung (60) aufweisc, die mit einer Gegenrastvorrichtung (61) am Verschlußmittel (58) zusammenwirkt.

18. Umlauf-Siebrechen nach Anspruch 17, **dadurch gekennzeichnet, daß** die Rast- und Gegenrastvorrichtung jeweils durch mehrere Rastnasen und Rastvertiefungen gebildet sind.

19. Umlauf-Siebrechen nach einem der vorhergehenden Ansprüche, **dadurch gekennzeichnet, daß** mehrere Rechenhakenelemente (16) vorgesehen sind, von denen jeweils eines zwischen zwei Platten (14) eines Siebelements (12) angeordnet ist, so daß eine Rechenhakenelementreihe (15) mit mehreren Rechenzinken (40) realisiert ist.

20. Umlauf-Siebrechen nach einem der vorhergehenden Ansprüche, **dadurch gekennzeichnet, daß** mehrere Siebelemente (12) des Siebbands (2) jeweils eine Rechenhakenelementreihe (15) aufweisen und daß die Rechenhakenelemente (16) einer Rechenhakenelementreihe (15) von einem stabförmigen Verbindungselement (13) durchgriffen sind, das die Schwenkachse der Rechenhakenelementreihe (15) bildet.

21. Umlauf-Siebrechen nach einem der vorhergehenden Ansprüche, **dadurch gekennzeichnet, daß** die Rechenhakenelemente (16) einer Rechenhakenelementreihe (15) zur Synchronisation ihrer Bewegung starr miteinander verbunden sind, wobei die starre Verbindung durch das Verbindungsstück (64) gebildet ist, das stabförmig ausgebildet ist.

22. Umlauf-Siebrechen nach Anspruch 21, **dadurch gekennzeichnet, daß** die starre Verbindung in den Übergangsbereichen zwischen den Schenkeln (38) und den Basen (39) der L-förmigen Rechenhakenelemente (16) vorgesehen ist.

23. Umlauf-Siebrechen nach einem der vorhergehenden Ansprüche, **dadurch gekennzeichnet, daß** der Schenkel (38) mit der Basis (39) einen Winkel (β) kleiner 90° einschließt, und daß die Länge des Schenkels (38) so bemessen ist, daß eine auf der Basis (39) beziehungsweise einer gedachten Linie (G) etwa mittig stehende, gedachte Normale (N) das Schenkelende (57) des L's schneidet.

24. Umlauf-Siebrechen nach einem der vorhergehenden Ansprüche, **dadurch gekennzeichnet, daß** sich die Randöffnung (55) des ersten Lagerauges (36) im wesentlichen in Längserstreckungsrichtung des Schenkels (38) und von der Basis (39) abgewandt öffnet, und daß die Randöffnung (56) des zweiten Lagerauges (37) etwa rechtwinklig zum Schenkel (38) angeordnet ist und am Schenkel (38) liegt.

25. Umlauf-Siebrechen nach Anspruch 1, **dadurch gekennzeichnet, daß** das Siebband (2) auf einer ersten und zweiten Umlenkeinrichtung (3,4) geführt ist, die an einem teleskopartig ausziehbaren Tragrahmen (41) angeordnet sind, der in seiner jeweiligen Ausziehstellung festlegbar ist.

26. Umlauf-Siebrechen nach Anspruch 25, **dadurch gekennzeichnet, daß** der Tragrahmen (41) aus zumindest zwei Teilrahmen (42,43) zusammengesetzt ist, die verschieblich miteinander verbunden sind.

27. Umlauf-Siebrechen nach Anspruch 26, **dadurch gekennzeichnet, daß** ein dritter Teilrahmen vorgesehen ist, der zwischen dem ersten und zweiten Teilrahmen (42,43) anordenbar ist, wobei zumindest der erste Teilrahmen (42) verschieblich mit dem dritten Teilrahmen verbunden ist.

## Claims

1. Revolving screening rack (1) comprising a driveable endless screening belt (2) formed by a plurality of screening elements (12) which in each case have a plurality of elongate plates (14) arranged parallel to and at a distance from one another, a bar-shaped connecting element (13) engaging in each case through the plates (14) at their two ends, said connecting element pivotally connecting the plates (14), engaging one into the other at least in regions, of two screening elements (12) to one another in the manner of a link chain, said screening belt further includes a pivotally mounted rack hook element (16) which is capable of being pivotally displaced, at least partially, between two plates (14) located side by side, and with a steering lever (17) for the rack hook element (16), said steering lever being pivotally articulated at one end (19) on the rack hook element, **characterised in that** the other end (20) of the steering lever (17) is pivotally mounted on the screening belt (2).

2. Revolving screening rack according to claim 1, **characterised in that** the steering lever (17) is fastened so as to be pivotally mounted at its other end (20) on a screening element (12) of the screening belt (2), said screening element following, as seen in the conveying direction (9) of the screening belt (2), the screening element (12) which has a rack hook element (16).

3. Revolving screening rack according to any of the preceding claims, **characterised in that** the bar-shaped connecting element (13) engages through the other end (20) of the steering lever (17).

4. Revolving screening rack according to any of the preceding claims, **characterised in that** at least one plate of the screening element (12), on which plate the steering lever (17) is mounted, is of substantially triangular form as a control shackle (14'), a bar-shaped connecting element (13) engaging in each case through two corner regions (30, 31), and the steering lever (17) being arranged so as to be pivotally mounted on the third corner region (34).

5. Revolving screening rack according to any of claims 1 to 3, **characterised in that** at least one plate of the screening element (12), on which plate the steering lever (17) is mounted, is of substantially T-shaped form as a control shackle (14'), a bar-shaped connecting element (13) engaging in each case through the ends of the transverse web (Q) of the T, and the steering lever (17) being arranged so as to be pivotally mounted on the free end of the horizontal web (H1) of the T.

6. Revolving screening rack according to any of claims 1 to 3, **characterised in that** at least one plate (14) of the screening element (12), on which plate the steering lever (17) is mounted, is of substantially L-shaped form as a control shackle (14'), a bar-shaped connecting element (13) engaging in each case through the ends of the long leg of the L, and the steering lever (17) being arranged so as to be pivotally mounted on the free end of the short leg (S) of the L.

7. Revolving screening rack according to claim 4, 5 or 6, **characterised in that** the control shackle (14') has a third bearing lug (35) which is formed on a prolongation (62) of the triangle, of the T or L, the prolongation (62) extending transversely to the longitudinal extent of the control shackle (14').

8. Revolving screening rack according to any of the preceding claims, **characterised in that** the rack hook element (16) is pivotally mounted on the connecting element (13).

9. Revolving screening rack according to any of the preceding claims, **characterised in that** the rack hook element (16) is of substantially L-shaped form, **in that** the rack hook element (16) is pivotally mounted on the free leg end (57) of the L between the two plates (14) of a screening element (12), and **in that** the rack hook element (16) forms a rack prong (40) with the base (39) of the L.

10. Revolving screening rack according to any of the preceding claims, **characterised in that** the steering lever (17) is pivotally articulated in the transitional region between the leg (38) and the base (39) of the L.

11. Revolving screening rack according to any of the preceding claims, **characterised in that** the rack hook element (16) has a first bearing lug (36), through which the bar-shaped connecting element (13) passes.

12. Revolving screening rack according to any of the preceding claims, **characterised in that** the rack hook element (16) has a second bearing lug (37), so that the rack hook element (16) can be fastened pivotally movably to the steering lever (17) by means of a connecting piece (64).

13. Revolving screening rack according to either of claims 11 and 12, **characterised in that** the two bearing lugs (36, 37) each have an edge orifice (55, 56).

14. Revolving screening rack according to either of claims 12 and 13, **characterised in that** the opening width (X) of the edge orifice (56) of the second bearing lug (37) is somewhat smaller than the cross-section of the connecting piece (64).

15. Revolving screening rack according to either of claims 11 and 13, **characterised in that** the first bearing lug (36) has an opening width (W) which is approximately equal to, preferably somewhat smaller than, the diameter of the bar-shaped connecting element (13).

16. Revolving screening rack according to claim 11, 13 and 15 **characterised in that** the first bearing lug (36) is capable of being closed in the region of its edge orifice (55) by a closing means (58) which is preferably adapted to the contour of the edge orifice (55).

17. Revolving screening rack according to claim 16, **characterised in that** at least one face (59; 59'), delimiting the edge orifice (55), of the first bearing lug (36) has a latching device (60) which cooperates with a counter-latching device (61) on the closing means (58).

18. Revolving screening rack according to claim 17, **characterised in that** the latching and counter-latching devices are formed in each case by a plurality of latching noses and latching depressions.

19. Revolving screening rack according to any of the preceding claims, **characterised in that** a plurality of rack hook elements (16) are provided, one of which is in each case arranged between two plates (14) of a screening element (12), so that a row (15) of rack hook elements with a plurality of rack prongs (40) is produced.

20. Revolving screening rack according to any of the preceding claims, **characterised in that** a plurality of screening elements (12) of the screening belt (2) in each case have a row (15) of rack hook elements, and **in that** a bar-shaped connecting element (13) engages through the rack hook elements (16) of a row (15) of rack hook elements and forms the pivot shaft of the row (15) of rack hook elements.

21. Revolving screening rack according to any of the preceding claims, **characterised in that** the rack hook elements (16) of a row (15) of rack hook elements are rigidly connected to one another for synchronising their movement, the rigid connection being formed by the connecting piece (64) which is of bar-shaped design.

22. Revolving screening rack according to claim 21, **characterised in that** the rigid connection is provided in the transitional regions between the legs (38) and the bases (39) of the L-shaped rack hook elements (16).

23. Revolving screening rack according to any of the preceding claims, **characterised in that** the leg (38) forms an angle (β) smaller than 90° with the base (39), and **in that** the length of the leg (38) is dimensioned in such a way that an imaginary perpendicular (N) standing approximately centrally on the base (39) or on an imaginary line (G) intersects the leg end (57) of the L.

24. Revolving screening rack according to any of the preceding claims, **characterised in that** the edge orifice (55) of the first bearing lug (36) opens substantially in the direction of longitudinal extent of the leg (38) and so as to face away from the base (39), and **in that** the edge orifice (56) of the second bearing lug (37) is arranged approximately at right angles to the leg (38) and is located on the leg (38).

25. Revolving screening rack according to claim 1, **characterised in that** the screening belt (2) is guided on a first and a second deflecting device (3, 4) which are arranged on a telescopically extendable supporting frame (41) which is capable of being fixed in its respective extended position.

26. Revolving screening rack according to claim 25, **characterised in that** the supporting frame (41) is composed of at least two subframes (42, 43) which are displaceably connected to one another.

27. Revolving screening rack according to claim 26, **characterised in that** a third subframe is provided, which is capable of being arranged between the first and the second subframe (42, 43), at least the first subframe (42) being displaceably connected to the third subframe.

## Revendications

1. Grille de criblage rotative (1) comprenant une bande de criblage (2) sans fin entraînable qui est constituée de plusieurs éléments de criblage (12) présentant chacun plusieurs plaques allongées (14) espacées les unes des autres et parallèles entre elles, les plaques (14) étant chacune traversées à leurs deux extrémités par un élément de liaison en forme de barre (13) qui relie entre elles, de façon pivotante, à la manière d'une chaîne à maillons, les plaques (14) de deux éléments de criblage (12) qui sont au moins en partie encastrées l'une dans l'autre, comprenant également un élément de ratissage en forme de crochet (16) monté de façon pivotante qui, en pivotant, peut passer au moins partiellement entre deux plaques adjacentes (14), ainsi qu'un levier de guidage (17) pour l'élément de ratissage en forme de crochet (16), qui est articulé de manière pivotante à l'élément de ratissage en forme de crochet par l'une de ses extrémités (19), **caractérisée en ce que** l'autre extrémité (20) du levier de guidage (17) est fixée de façon pivotante sur la bande de criblage (2).

2. Grille de criblage rotative selon la revendication 1, **caractérisée en ce que** le levier de guidage (17) est fixé de façon pivotante par son autre extrémité (20) à un élément de criblage (12) de la bande de criblage (2) qui, vu dans le sens d'avance (9) de la bande de criblage (2), est situé en aval de l'élément de criblage (12) qui porte un élément de ratissage en forme de crochet (16).

3. Grille de criblage rotative selon l'une des revendications précédentes, **caractérisée en ce que** l'autre extrémité (20) du levier de guidage (17) est traversée par un élément de liaison en forme de barre (13).

4. Grille de criblage rotative selon l'une des revendications précédentes, **caractérisée en ce qu'**au moins une plaque de l'élément de criblage (12), sur laquelle est monté le levier de guidage (17), est réalisée en tant que pièce de commande (14'), essentiellement en forme de triangle, deux zones d'angle (30, 31) étant chacune traversées par un élément de liaison en forme de barre (13) et le levier de guidage (17) étant monté de façon pivotante sur la troisième zone d'angle (34).

5. Grille de criblage rotative selon l'une des revendications 1 à 3, **caractérisée en ce qu'**au moins une plaque de l'élément de criblage (12), sur laquelle est monté le levier de guidage (17), est réalisée en tant que pièce de commande (14'), essentiellement en forme de T, les extrémités de la branche transversale (Q) du T étant chacune traversées par un élément de liaison en forme de barre (13) et le levier de guidage (17) étant monté de façon pivotante sur l'extrémité libre de la branche horizontale (H1) du T.

6. Grille de criblage rotative selon l'une des revendications 1 à 3, **caractérisée en ce qu'**au moins une plaque (14) de l'élément de criblage (12), sur laquelle est monté le levier de guidage (17) est réalisée en tant que pièce de commande (14'), essentiellement en forme de L, les extrémités de la longue branche du L étant chacune traversées par un élément de liaison en forme de barre (13) et le levier de guidage (17) est monté de façon pivotante sur l'extrémité libre de la courte branche (S) du L.

7. Grille de criblage rotative selon la revendication 4, 5 ou 6, **caractérisée en ce que** la pièce de commande (14') présente un troisième oeillet de support (35) qui est réalisé sur un prolongement (62) du triangle, du T ou du L, le prolongement (62) s'étendant transversalement à l'étendue longitudinale de la pièce de commande (14').

8. Grille de criblage rotative selon l'une des revendications précédentes, **caractérisée en ce que** l'élément de ratissage en forme de crochet (16) est monté de façon pivotante sur l'élément de liaison (13).

9. Grille de criblage rotative selon l'une des revendications précédentes, **caractérisée en ce que** l'élément de ratissage en forme de crochet (16) est réalisé essentiellement en forme de L, **en ce que** l'élément de ratissage en forme de crochet (16) est fixé de façon pivotante sur l'extrémité libre (57) de la branche du L entre les deux plaques (14) d'un élément de criblage (12), et **en ce que** l'élément de ratissage en forme de crochet (16) forme avec la base (39) du L une dent de ratissage (40).

10. Grille de criblage rotative selon l'une des revendications précédentes, **caractérisée en ce que**, dans la zone de transition entre la branche (38) et la base (39) du L, le levier de guidage (17) est monté de façon pivotante.

11. Grille de criblage rotative selon l'une des revendications précédentes, **caractérisée en ce que** l'élément de ratissage en forme de crochet (16) présente un premier oeillet de support (36) que traverse l'élément de liaison en forme de barre (13).

12. Grille de criblage rotative selon l'une des revendications précédentes, **caractérisée en ce que** l'élément de ratissage en forme de crochet (16) présente un deuxième oeillet de support (37) de manière à pouvoir fixer l'élément de ratissage en forme de crochet (16) de façon pivotante au levier de guidage (17) par un élément de liaison (64).

13. Grille de criblage rotative selon la revendication 11 et 12, **caractérisée en ce que** le deux oeillets de support (36, 37) présentent chacun une ouverture périphérique (55, 56).

14. Grille de criblage rotative selon la revendication 12 et 13, **caractérisée en ce que** la largeur d'ouverture (X) de l'ouverture périphérique (56) du deuxième oeillet de support (37) est légèrement inférieure à la section transversale de l'élément de liaison (64).

15. Grille de criblage rotative selon la revendication 11 et 13, **caractérisée en ce que** le premier oeillet de support (36) présente une largeur d'ouverture (W) qui est approximativement égale, de préférence légèrement inférieure au diamètre de l'élément de liaison en forme de barre (13).

16. Grille de criblage rotative selon la revendication 11, 13 et 15, **caractérisée en ce que** le premier oeillet de support (36) peut être fermé dans la zone de son ouverture périphérique (55) par un moyen d'obturation (58) qui est de préférence adapté au contour de l'ouverture périphérique (55).

17. Grille de criblage rotative selon la revendication 16, **caractérisée en ce qu'**au moins une surface (59 ; 59') du premier oeillet de support (36) délimitant l'ouverture périphérique (55) présente un dispositif à crans (60) qui coopère avec un dispositif à crans complémentaire (61) au niveau du moyen d'obturation (58).

18. Grille de criblage rotative selon la revendication 17, **caractérisée en ce que** le dispositif à crans et le dispositif à crans complémentaire sont réalisés chacun par plusieurs saillies et encoches.

19. Grille de criblage rotative selon l'une des revendications précédentes, **caractérisée en ce que** sont prévus plusieurs éléments de ratissage en forme de crochet (16) dont l'un est à chaque fois situé entre deux plaques (14) d'un élément de criblage (12), de manière à former une rangée d'éléments de ratissage en forme de crochet (15) comportant plusieurs dents de ratissage (40).

20. Grille de criblage rotative selon l'une des revendications précédentes, **caractérisée en ce que** plusieurs éléments de criblage (12) de la bande de criblage (2) présentent chacun une rangée d'éléments de ratissage en forme de crochet (15), et **en ce que** les éléments de ratissage en forme de crochet (16) d'une rangée d'éléments de ratissage en forme de crochet (15) sont traversés par un élément de liaison en forme de barre (13) qui constitue l'axe de pivotement de la rangée d'éléments de ratissage en forme de crochet (15).

21. Grille de criblage rotative selon l'une des revendications précédentes, **caractérisée en ce que** les éléments de ratissage en forme de crochet (16) d'une rangée d'éléments de ratissage en forme de crochet (15) sont reliés entre eux de façon rigide afin d'obtenir une synchronisation de leurs mouvements, la liaison rigide étant formée par l'élément de liaison (64) qui est réalisé en forme de barre.

22. Grille de criblage rotative selon la revendication 21, **caractérisée en ce que** la liaison rigide est prévue dans les zones de transition entre les branches (38) et les bases (39) des éléments de ratissage en forme de crochet (16) en forme de L.

23. Grille de criblage rotative selon l'une des revendications précédentes, **caractérisée en ce que** la branche (38) forme avec la base (39) un angle (β) inférieur à 90°, et **en ce que** la longueur de la branche (38) est telle qu'une perpendiculaire imaginaire (N) à la base (39) ou à une ligne imaginaire (G), qui est située approximativement au centre, coupe l'extrémité (57) de la branche du L.

24. Grille de criblage rotative selon l'une des revendications précédentes, **caractérisée en ce que** l'ouverture périphérique (55) du premier oeillet de support (36) s'ouvre essentiellement dans la direction de l'étendue longitudinale de la branche (38) et à l'opposé de la base (39), et **en ce que** l'ouverture périphérique (56) du deuxième oeillet de support (37) est disposée approximativement perpendiculairement à la branche (38) et est située sur la branche (38).

25. Grille de criblage rotative selon la revendication 1, **caractérisée en ce que** la bande de criblage (2) est guidée sur un premier et un second dispositif de renvoi (3, 4) qui sont montés sur un bâti télescopique (41) pouvant être bloqué dans la position dans laquelle il a été déployé.

26. Grille de criblage rotative selon la revendication 25, **caractérisée en ce que** le bâti (41) est composé d'au moins deux parties de bâti (42, 43) qui sont reliées entre elles de manière à pouvoir coulisser.

27. Grille de criblage rotative selon la revendication 26, **caractérisée en ce qu'**une troisième partie de bâti est prévue, qui peut être placée entre la première et la deuxième partie de bâti (42, 43), au moins la première partie de bâti (42) étant reliée de façon coulissante à la troisième partie de bâti.
